# EUROPÄISCHE PATENTSCHRIFT

(11) **EP 1 960 319 B1**
(45) Veröffentlichungstag und Bekanntmachung des Hinweises auf die Patenterteilung: **22.06.2016**
(21) Anmeldenummer: 06819913.2
(22) Anmeldetag: 06.12.2006
(51) Int. Cl.: A61C 8/00, B82Y 30/00, C04B 35/115, C04B 35/632, C04B 35/634, C04B 35/638, C04B 35/645

(54) **VERFAHREN ZUR HERSTELLUNG VON TRANSPARENTEM ALUMINIUMOXID-KERAMIK-WERKSTOFF**
METHOD OF MAKING A TRANSPARENT ALUMINA CERAMIC MATERIAL
PROCÉDÉ DE PRÉPARATION D'UN MATÉRIAU TRANSPARENTE CÉRAMIQUE DE L'ALUMINE

(30) Priorität: 08.12.2005 DE 102005059099
(43) Veröffentlichungstag der Anmeldung: 27.08.2008
(73) Patentinhaber: CeramTec GmbH, 73207 Plochingen (DE)
(72) Erfinder: BRÄUER, Volker, 71394 Kernen (DE); KLOTZ, Dietmar, 73035 Bezgenriet (DE); STINGL, Peter, Dr., 91207 Lauf (DE); WITTIG, Frank, 91052 Erlangen (DE); ZIMMERMANN, Ulf-Dieter, Dr., 70192 Stuttgart (DE)
(74) Vertreter: Uppena, Franz
(86) Internationale Anmeldenummer: PCT/EP2006/069381
(87) Internationale Veröffentlichungsnummer: WO 2007/065914

(56) Entgegenhaltungen:
- EP-A1- 0 430 654
- EP-A1- 0 765 848
- EP-A2- 1 053 983
- WO-A-2004/007398
- DE-A1- 10 101 169
- JP-A- 4 198 059
- JP-A- 7 187 758
- US-A1- 2003 125 189
- KRELL ANDREAS ET AL: "Transparent sintered corundum with high hardness and strength" J AM CERAM SOC; JOURNAL OF THE AMERICAN CERAMIC SOCIETY JANUARY 2003, Bd. 86, Nr. 1, Januar 2003 (2003-01), Seiten 12-18, XP002422581
- MARK V. PARISH ET AL: 'AERODYNAMIC IR DOMES OF POLYCRYSTALLINE ALUMINA' PROCEEDINGS OF SPIE Bd. 5786, 18 Mai 2005, Seiten 195 - 205, XP055188224 DOI: 10.1117/12.604596 ISSN: 0277-786X

## Beschreibung

Gegenstand der vorliegenden Erfindung ist ein Verfahren zur Herstellung eines Sinterkörpers aus transparentem Aluminiumoxidkeramik-Werkstoff.

Al₂O₃-Keramik ist insbesondere wegen seiner Biokompatibilität ein bevorzugter Werkstoff in der Prothetik und Dentaltechnik. Durch eine geeignete spezielle Werkstoffzusammensetzung sowie spezielle Herstellungsverfahren lässt sich eine transluzente oder transparente Keramik herstellen, die ein Gefüge mit besonders geringer mittlerer Korngröße aufweist und vorzugsweise in der Zahnmedizin bei der Regulierung der Zahnstellung Anwendung findet. Die mit sogenannten Brackets versehenen Zähne werden mit Spanndrähten reguliert. Brackets werden wegen der oben genannten Werkstoffeigenschaften in zunehmenden Maße aus hochfester Keramik gefertigt.

Dokument JP7187758 A zeigt ein Verfahren zur Herstellung eines Aluminiumoxidformkörpers, in dem 99.99% reines Aluminiumoxidpulver mit 0,1 Gew.-% MgO gemischt wird. Das Aluminiumoxidpulver hat eine mittlere Partikelgrösse von 0,2 Mikrons. Die oxidischen Pulver werden mit organischen Additiven, zur Herstellung einer Spritzgiessmasse, vermischt. Diese Masse wird spritzgegossen, vorgesintert bei 1300°C und heissisostatisch unter Argonatmosphäre bei 1000 bar und 1350°C nachverdichtet.

Die Aufgabe der vorliegenden Erfindung ist es, eine feinkörnige transparente Al₂O₃-Keramik herzustellen, die zusätzlich hervorragende mechanische Eigenschaften aufweist.

Die Lösung der Aufgabe erfolgt durch ein Herstellungsverfahren, bei dem Grünkörper durch Hochdruck-Spritzgießen hergestellt werden und nach dem Entbindern und Vorsintern durch heißisostatisches Pressen (HIP) eine Nachverdichtung erfahren.

Das Ergebnis ist eine dichte, porenfreie, transparente Al₂O₃-Keramik mit einer mittleren Kristallitgröße kleiner 1 µm, vorzugsweise kleiner 0,6 µm
Anhand eines Ausführungsbeispiels wird die Erfindung näher erläutert.

Zunächst erfolgte die Masseaufbereitung einer Spritzmasse:
Eingesetzt wurden folgende Rohstoffe: Tonerde mit folgenden Eigenschaften: Reinheit = 99,99 %; spezifische Oberfläche des Pulvers: 13 m²/g; mittlere Korngröße 0,16 µm.

MgO mit folgenden Eigenschaften: Reinheit = 99,98 %; spezifische Oberfläche des Pulvers: 33 m²/g; durchschnittliche mittlere Korngröße 0,05 µm.

Zur Herstellung des Spritzversatzes wurden 1,050 kg Al₂O₃, 300 ppm MgO und 10 g Fettsäure mit Al₂O₃-Mahlkugeln in einer Vibrationskugelmühle vier Stunden lang homogenisiert.

Anschließend erfolgte in einem Kneter die Zugabe der Bindemittel. Der Vormischung wurden zugegeben: 3,1 % einer Polyvinylalkoholmischung, 4,2 % Wachse, 3,3 % einer Mischung aus Fettalkohol und Polyvinylacetat, 2,3 % Weichmacher und 0,7 % Fettsäure. Die Knetzeit betrug 1 h. Die Masse wurde dem Kneter entnommen und die schlecht homogenisierten Bestandteile entfernt. Anschließend erfolgte im gereinigten Kneter unter Temperatureinwirkung, bei 95°C, die Granulierung der Masse.

Das Granulat wurde mit einem 630 µm-Sieb und einem 6 mm-Sieb fraktioniert, so dass ein Spritzgussgranulat einen Anteil mit einer Granulatgröße von 0,63 µm bis 6 mm enthielt.

Im nächsten Verfahrensschritt erfolgte das Spritzen der Grünkörper:
In einer Hochdruck-Spritzanlage wurden mittels Hochdruck-Spritzformen bei 140°C Spritztemperatur und einem spezifisch wirksamen Spritzdruck von 700 bar vollautomatisch Formkörper (Bauteile) hergestellt.

Die Temperatur beim Spritzen muss so gewählt werden, dass das Granulat homogen schmilzt aber die Organikanteile thermisch nicht geschädigt werden. Das Einspritzen erfolgt in zwei Stufen. Zunächst erfolgt der Anguss langsam und dann eine schnelle Formfüllung. Mit dem so genannten Nachdruck wird die Form versiegelt, damit diese bei Druckentlastung nicht ausläuft. Der Nachdruck darf allerdings nicht so groß sein, dass die Teile geschädigt werden. Es muss darauf geachtet werden, dass die Gründichte im Formkörper homogen eingestellt wird.

Beim Hochdruck-Spritzgießen erfolgt eine besonders dichte und homogene Füllung der Spritzformen, was sich vorteilhaft auf das Kornwachstum im nachfolgenden Sinterprozess auswirkt.

Als weiterer Verfahrensschritt erfolgte das Entbindern:
Die Entbinderung, also die Entfernung der Bindemittel aus dem Grünkörper, wurde in einem Elektroofen durchgeführt. Die Bauteile wurden in 80 h langsam bis auf 380°C aufgeheizt Auf dieser Temperatur wurde der Ofen 4 Stunden gehalten und danach abgeschaltet. Nach einer Abkühlzeit von 12 Stunden wurden die entbinderten Grünkörper entnommen.

Als nächster Verfahrensschritt folgte das Vorsintern:
Um erfolgreich heißisostatisch verdichten zu können, müssen die Teile eine geschlossene Porosität haben. Dazu wird eine Vorsinterung durchgeführt. Im vorliegenden Ausführungsbeispiel wurde die Vorsinterung in einem Elektroofen nach folgendem Programm durchgeführt: Die Aufheizung erfolgte mit einem Temperaturanstieg von 100°C/h von 30°C bis auf 1240°C. Auf dieser Temperatur wurde der Ofen 1,5 Stunden lang gehalten und danach abgeschaltet.

Entbindern und Vorsintern wurden in einem anderen Ausführungsbeispiel auch nacheinander in demselben Elektroofen durchgeführt. Dazu wurden die Formkörper in 46 h auf 1240°C entbindert und vorgesintert Auf dieser Temperatur wurde der Ofen 1,5 Stunden lang gehalten und danach abgeschaltet.

Die mittlere Korngröße nach dem Vorsintern betrug 0,3 µm, ermittelt nach DIN V ENV 523, Teil 3.

Abschließend erfolgte das heißisostatische Pressen:
Die vorgesinterten Teile wurden in einer heißisostatischen Presse nachverdichtet, die mit Molybdän-Heizelementen ausgestattet war. Dazu wurden die Teile in einen verschließbaren Al₂O₃-Tiegel gesetzt. Der Rezipient, in dem sich der Tiegel befand, wurde mit Argon gespült. Dann wurde mit einem Temperaturanstieg von 10°K/min bis auf 1275°C aufgeheizt bei gleichzeitiger linearer Argondruckerhöhung bis auf 1500 bar. Bei Erreichen einer Temperatur von 1275°C wurde eine Haltezeit von 1 Stunde eingelegt. Der Ofen wurde bis auf 800°C mit einem Temperaturabfall von 10°K/min und gleichzeitiger Druckentlastung abgekühlt. Anschließend wurde bis auf 200°C abgekühlt und das Gas langsam abgelassen.

Danach wurden die fertigen Teile entnommen. Sie waren nicht nur transluzent sondern sogar transparent. Es wurden folgende Werkstoffwerte ermittelt:

**Tabelle 1: Werkstoffwerte und Prüfmethoden**

| Merkmal | Einheit | Wert | Prüfmethode |
|---|---|---|---|
| Dichte | g/cm³ | 3,99 | DIN EN 60672-2 |
| Biegefestigkeit | MPa | 950 | 3 Pkt; Stützweite 10 mm |
| E-Modul | GPa | 417 | DIN EN 60672-2 |
| Härte HV₁₀ | | 2130 | DIN V ENV 843-3 |
| Mittlere Korngröße | µm | 0,4 | DIN V ENV 623, Teil 3 |
| Inline Transmission | % | 28 | X-Rite 8200 (Fa. X-Rite; USA) |

**Tabelle 2: Einfluss des Formgebungsverfahrens auf die Werkstoffeigenschaften**

| Eigenschaft | Einheit | gepresst (1800 bar)+ HIP | niederdruckgespritzt + HIP | hochdruckgespritzt + HIP |
|---|---|---|---|---|
| Dichte | g/cm³ | 3,99 | 3,99 | 3,99 |
| mittlere Korngröße | µm | 1,56 | 0,58 | 0,4 |
| Biegefestigkeit | MPa | 851 | 898 | 950 |
| Härte HV10 | | 1867 | 2015 | 2130 |
| Bruchwiderstand K_{IC} | MPam1/2 | 3,4 | 4,1 | 4,2 |
| direkte Tranmission bei 650 nm | % | 18 | 24 | 28 |
| E-Modul | GPa | 417 | 417 | 417 |

Die Tabelle 2 zeigt eine Gegenüberstellung der Werkstoffeigenschaften von Sinterkörpern aus Al₂O₃-Keramik, die nach unterschiedlichen Verfahren hergestellt wurden. Bei allen Werkstoffen wurde der Versatz konstant gehalten: identische Zusammensetzung; identische Ausgangspulver. In der ersten Spalte stehen die Werte von Sinterkörpern, deren Grünkörper durch uniaxiales Pressen geformt wurden. Bei den Sinterkörpern der zweiten Spalte erfolgte die Formgebung der Grünkörper durch Niederdruck-Spritzgießen (Maximaldruck 10 bar) und in der dritten Spalte stehen die Ergebnisse der Sinterkörper, die nach dem erfindungsgemäßen Verfahren geformt und gesintert wurden. Es ist eine drastische Steigerung der Werkstoffeigenschaften von der herkömmlichen Formgebung mittels uniaxialem Pressen, dem Niederdruck-Spritzgießen bis hin zum Hochdruck-Spritzgießen zu erkennen, obwohl alle Sinterkörper nach demselben Sinterverfahren vorgebrannt und anschließend mit dem identischen Verfahren heißisostatisch gepresst (HIP) wurden. Festigkeit, Härte und Bruchwiderstand nehmen zu. Insbesondere die mittlere Korngröße, die einen wesentlichen Einfluss auf die mechanischen Eigenschaften hat, sinkt auf Werte, die aus dem Stand der Technik nicht bekannt sind. Voraussetzung dafür, dass ein porenfreier, dichter Körper mit transparenten oder transluzenten Eigenschaften sowie hoher mechanischer Festigkeit erhalten wird, ist die Anwendung eines Verfahrens, das eine möglichst homogene Vorverdichtung ermöglicht. Angestrebt wird die Erzielung möglichst defektarmer, feinkristalliner Gefüge. Überraschend ist, dass mit dem oben beschriebenen Hochdruck-Spritzgießen ausreichend homogene Grünkörper herstellbar sind, aus welchen nach dem HIP-Prozess Bauteile nahe der theoretischen Dichte und einem sehr feinkörnigem Gefüge entstehen, die transparent sind. Generell kann der Prozess jedoch auch so gesteuert werden, dass transluzente Sinterkörper entstehen. Weiterhin weisen derartig hergestellte Werkstoffe eine bei reinem Aluminiumoxid bisher nicht erreichte Festigkeit auf.

Nach dem Stand der Technik, wie er beispielsweise aus der EP0756586 B1 und der Veröffentlichung von Krell et al., "Verarbeitung von Feinst- und Nanopulvern", DKG-Symposium, Erlangen, 04.-05.12.2001, bekannt ist, konnten hochfeste, transparente Aluminiumoxid-Werkstoffe nur durch die Wahl von hochaktiven, feinkörnigen, hochreinen Ausgangspulvern erreicht werden, mit denen durch ein geeignetes Formgebungsverfahren ein defektarmes, porenfreies Gefüges erreicht wurde.

In der EP 0756586 werden ausnahmslos Formgebungsverfahren beschrieben, die von einem flüssigen Schlicker ausgehen. Durch geeignete Verfahren wie z. B. Gelcasting, Gefriertrockung/CIP oder Druckfiltration wird dem Schlicker die Flüssigkeit entzogen und es bildet sich im Idealfall ein homogener Grünkörper. Der entscheidende Vorteil der "flüssigen Formgebung" ist die Tatsache, dass durch die anfängliche Beweglichkeit der Feststoffteilchen im flüssigen Medium eine möglichst dichte Packung der Feststoffteilchen bei geeigneter Prozessführung erreicht wird. Dadurch können defektarme Formkörper mit guten optischen und mechanischen Eigenschaften hergestellt werden. Solche defektarmen Gefüge bzw. Formkörper können über die üblichen Formgebungsverfahren durch Pressen wie beispielsweise Trockenpressen oder isostatisches Pressen nicht realisiert werden.

Alle gebräuchlichen Pressverfahren basieren auf der Verdichtung von Granulaten, die i. a. über Sprühtrocknungverfahren hergestellt werden. Bedingt durch die Kugelstruktur der Granulate lässt es sich nicht vermeiden, dass es zwischen den verdichteten Granulen zur Ausbildung von Zwickeln kommt, die beim nachgeschalteten Sinterprozess nicht vollständig entfernt werden können. Durch diese verbleibenden Zwickel im Gefüge werden sowohl die optischen Eigenschaften als auch die mechanischen Eigenschaften negativ beeinflusst.

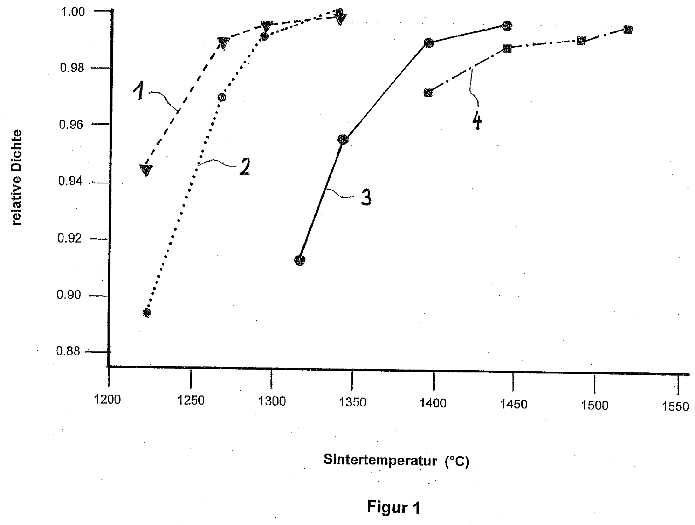

Gemäß dem Diagramm, Figur 1, das der Veröffentlichung von Krell et al., "Verarbeitung von Feinst- und Nanopulvern", DKG-Symposium, Erlangen, 04.-05.12.2001, entnommen wurde und in dem der Einfluss des Formgebungsverfahrens auf die Dichte beim Sintern von hochreinem Aluminiumoxid dargestellt ist, wird deutlich, dass mit herkömmlichen Pressverfahren die theoretische Dichte wegen der Restporosität nicht erreicht wird und hohe Dichten erst bei hohen Temperaturen erreicht werden. In dem Diagramm ist die relative Dichte über der Temperatur aufgetragen, die bei den unterschiedlichen Formgebungsverfahren erzielt wird. Kurve 1 gibt den Dichteverlauf beim Gelcasting wieder, bei dem eine Gründichte von 56% bis 60% erreicht wird; Kurve 2 gibt den Dichteverlauf bei der Druckfiltration wieder, bei der eine Gründichte von 64% bis 66% erreicht wird; Kurve 3 gibt den Dichteverlauf beim CIP wieder, bei dem eine Gründichte von 58% bis 60% erreicht wird und Kurve 4 gibt den Dichteverlauf beim uniaxialen Trockenpressen wieder, bei dem eine Gründichte von 57% bis 58% erreicht wird.

Da die treibende Kraft für das Kornwachstum beim Sintern die Temperatur ist, ergeben sich bei Temperaturen von 1400°C relativ grobkörnige Gefüge mit einem vergleichsweise niedrigen Festigkeitsniveau. Das Hauptziel einer Werkstoffentwicklung wird somit sein, eine Technologie bereitzustellen, die ein Erreichen der theoretischen Dichte bei möglichst geringen Temperaturen zulässt. Wie aus dem Diagramm hervorgeht, ist dies bei Verfahren mit flüssiger Formgebung möglich; die notwendigen Sintertemperaturen liegen deutlich unter dem Niveau der Pressverfahren. Damit werden feinkristalline Gefüge mit hohen Festigkeitswerten und guten optischen Eigenschaften möglich. Wird der Sinterbrand bei beispielsweise 96% der theoretischen Dichte gestoppt und anschließend die Endverdichtung durch heißisostatisches Pressen erreicht, so können annähernd porenfreie, feinkristalline Gefüge erzielt werden.

Um sehr komplizierte Formteile, wie z. B. keramische Brackets, in großen Stückzahlen herstellen zu können, sind prozesssichere, großserientaugliche Verfahren notwendig. Verfahren wie Druckfiltration oder Gelcasting sind hierfür aus Kostengründen als nicht geeignet einzustufen. Deshalb wurde ein geeignetes Spritzgussverfahren zur Herstellung von hochfesten, transluzenten Brackets entwickelt.

Wie allgemein bekannt, wird bei der Formgebung durch Spritzguss von einem granulatähnlichen Schüttgut ausgegangen. Gemäß dem Diagramm erscheint das Spritzgussverfahren als wenig geeignet zur Herstellung hochfester, defektarmer, feinkristalliner Werkstoffe (Formgebung nicht auf Schlickerbasis). Umso überraschender ist der Effekt bei der vorliegenden Erfindung, dass gekoppelt mit einer geeigneten HIP-Technologie hochfeste, transparente Brackets mit feinkristallinem Gefüge hergestellt werden können. Beim Formgebungsverfahren wurden zwei Richtungen verfolgt, das Niederdruck-Spritzgießen mit einem Maximaldruck von 20 bar und das Hochdruck-Spritzgießen mit einem Maximaldruck von 700 bar.

Gemäß Tabelle 2 wird deutlich, dass im Vergleich zu den gepressten Teilen beim Spritzgussverfahren die mittlere Korngröße im Gefüge drastisch abnimmt und Werte im Bereich von etwa 0,4 µm erreicht werden. Durch den HIP-Prozess wird die theoretische Dichte erreicht, d. h. die Teile zeigen eine hohe Durchscheinbarkeit. Defektarmut, gekoppelt mit feinkristallinen Gefügen führen zu herausragenden mechanischen Eigenschaften, was sich insbesondere in der exzellenten Biegefestigkeit von 949 MPa manifestiert. Mit Hilfe des erfindungsgemäßen Verfahrens können Sinterteile hergestellt werden, beispielsweise Brackets, die entgegen dem jetzigen Stand der Technik nicht mehr nachbearbeitet werden müssen.

Im Stand der Technik werden zur Herstellung von Werkstoffen mit ähnlichen Eigenschaften Formgebungstechniken beschrieben, die im Wesentlichen nur einfache Geometrien ermöglichen. Nach dem in der EP 0 756 586 B1 beschriebenen Verfahren werden Korngrößen kleiner gleich 1,5µm mit Druckfiltration, isostatischem Pressen mit vorgeschalteter Gefriertrocknung oder mittels Gelcasting erreicht. Diese Verfahren ermöglichen jedoch keine komplexen Bauteile, ohne dass aufwendige Nachbearbeitungsschritte notwendig sind. Insbesondere durch Hartbearbeitungsverfahren kann die Oberfläche keramischer Werkstoffe ungünstig beeinflusst werden. Durch Kerben oder Ausbrüche werden der visuelle Eindruck und vor allem die Festigkeit negativ beeinträchtigt.

Weil eine nachträgliche Hartbearbeitung nicht mehr erforderlich ist, weisen die nach dem erfindungsgemäßen Verfahren hergestellten Sinterkörper sehr hohe Festigkeiten auf. Dadurch ist es möglich, die Abmessungen der Brackets zu reduzieren. Weiterhin kann auf bisher notwendige Komponenten wie z. B. Metallliner zum Führen der Spanndrähte ganz verzichtet werden. Dadurch werden diese noch unauffälliger. Mit dem Hochdruck-Spritzgießen können weiterhin komplizierte Geometrien realisiert werden, die bisher nur für metallische Ausführungen in Frage kamen.

Weil eine Nachbearbeitung der Sinterteile nicht mehr erforderlich ist, weist die Oberfläche eine sehr geringe Rauheit auf. Typische Werte sind Ra: 0,08 µm, Rz: 0,7 µm, Rt: 1,3 µm (nach DIN EN ISO 4287) Die Rauheitsprüfung erfolgte mit einem Hommeltester TK 100, Messbereich 80 µm, Waveline 60, Taststrecke 1,50 mm, Lc 0,250 mm Filter M1 DIN 4777. In Folge der geringen Rauheit verringert sich die Reibung. Bei der Verwendung von erfindungsgemäß hergestellten Sinterkörpern als Brackets werden Zwischenlagen als Gleithilfen, so genannte Inliner, wie sie nach dem Stand der Technik bei Brackets wegen ihrer rauhen Oberflächen teilweise üblich sind, überflüssig, wodurch der Tragekomfort erhöht und der ästhetische Eindruck verbessert wird.

## Patentansprüche

1. Verfahren zur Herstellung eines Sinterkörpers aus transparentem Aluminiumoxid-Keramik-Werkstoff mit einer gesamten Transmission bei 650 nm von ≥ 60 %, **dadurch gekennzeichnet, dass** Tonerde mit einem Reinheitsgrad von ≥ 99,99 % und einer spezifischen Oberfläche von > 10 m²/g und einer mittleren Korngröße von < 0,3 µm verwendet wird, dass den Ausgangspulvern geeignete organische Komponenten homogen beigemischt werden, so dass ein spritzfähiges Granulat entsteht, dass anschließend mittels Hochdruck-Spritzgießen unter Erwärmung auf bis zu 180 °C und einem spezifisch wirksamen Druck von bis zu 700 bar ein Grünkörper geformt wird, der bei 1100 °C bis 1300 °C vorgesintert und anschließend heißisostatisch unter Schutzgasatmosphäre bei Drücken von > 1000 bar und Temperaturen von > 1200 °C nachverdichtet wird.

2. Verfahren nach Anspruch 1, **dadurch gekennzeichnet, dass** als Schutzgas Argon verwendet wird.

3. Verfahren nach Anspruch 1 oder 2, **dadurch gekennzeichnet, dass** Verbindungen von Elementen der Alkali bzw. Erdalkaligruppe mit Gehalten von < 500 ppm zur Erzielung feinkristalliner Gefüge zugesetzt werden.

4. Verfahren nach Anspruch 3, **dadurch gekennzeichnet, dass** Mg zugesetzt wird.

## Claims

1. A method for producing a sintered body of transparent aluminium-oxide ceramic material having a total transmission at 650 nm of ≥ 60%, **characterised in that** alumina having a degree of purity of ≥ 99.99 % and a specific surface area of > 10 m²/g and an average grain size of < 0.3 µm is used, **in that** suitable organic components are homogeneously admixed with the starting powders so that an injectable granular material develops, **in that** subsequently by means of highpressure injection-moulding with heating to up to 180°C and a specifically effective pressure of up to 700 bar a green body is formed that is pre-sintered at 1100°C to 1300°C and subsequently is re-compressed by hot isostatic pressing in an inert-gas atmosphere at pressures of > 1000 bar and temperatures of > 1200°C.

2. A method according to claim 1, **characterised in that** argon is used as the inert gas.

3. A method according to claim 1 or 2, **characterised in that** compounds of elements of the alkali or alkaline-earth group with contents of < 500 ppm are added in order to attain a finely crystalline structure.

4. A method according to claim 3, **characterised in that** Mg is added.

## Revendications

1. Procédé de fabrication d'un corps fritté en un matériau céramique d'oxyde d'aluminium transparent, présentant un taux global de transmission à 650 nm supérieur ou égal à 60 %, **caractérisé en ce que** l'on utilise une alumine qui présente un degré de pureté supérieur ou égal à 99,99 %, une aire spécifique de plus de 10 m²/g et une taille moyenne de grain de moins de 0,3 µm, **en ce qu'**aux poudres de départ sont mélangés, de façon homogène, des composants organiques appropriés pour qu'il se forme un granulat injectable, et **en ce qu'**on façonne ensuite avec celui-ci, par moulage par injection sous haute pression, tout en chauffant à une température pouvant aller jusqu'à 180 °C et en opérant sous une pression spécifique effective pouvant aller jusqu'à 700 bars, un corps cru auquel on fait subir un pré-frittage à une température de 1100 °C à 1300 °C, puis une densification par compression isostatique à chaud sous atmosphère de gaz protecteur, sous une pression de plus de 1000 bars et à une température de plus de 1200 °C.

2. Procédé conforme à la revendication 1, **caractérisé en ce que** l'on utilise de l'argon en tant que gaz protecteur.

3. Procédé conforme à la revendication 1 ou 2, **caractérisé en ce qu'**on ajoute des composés d'éléments alcalins ou alcalino-terreux, en des teneurs de moins de 500 ppm, pour obtenir une structure formée de fins cristaux.

4. Procédé conforme à la revendication 3, **caractérisé en ce que** l'on ajoute du magnésium.
